# FASCICULE DE BREVET EUROPEEN

(11) **EP 2 142 397 B1**
(45) Date de publication et mention de la délivrance du brevet: **14.03.2012**
(21) Numéro de dépôt: 08805721.1
(22) Date de dépôt: 28.04.2008
(51) Int. Cl.: B60L 11/18, H02M 7/5387

(54) **DISPOSITIF ET PROCEDE DE COMMANDE D'UN CIRCUIT DE DERIVATION DE PUISSANCE, VEHICULE HYBRIDE L'AYANT**
VORRICHTUNG UND VERFAHREN ZUR STEUERUNG EINER SHUNT-STROMSCHALTUNG UND HYBRIDFAHRZEUG DAMIT
DEVICE AND METHOD FOR CONTROLLING A POWER SHUNT CIRCUIT, HYBRID VEHICLE HAVING SAME

(30) Priorité: 03.05.2007 FR 0703182
(43) Date de publication de la demande: 13.01.2010
(73) Titulaire: Renault S.A.S., 92100 Boulogne-Billancourt (FR)
(72) Inventeur: PUGSLEY, GARETH, F-78330 Fontenay Le Fleuri (FR); LOUDOT, SERGE, F-91190 Villiers Le Bacle (FR)
(86) Numéro de dépôt international: PCT/FR2008/050767
(87) Numéro de publication internationale: WO 2008/148977

(56) Documents cités:
- EP-A- 1 186 464
- JP-A- 2000 078 850
- US-A- 5 414 339
- US-A1- 2005 162 023
- US-A1- 2005 225 270

## Description

L'invention concerne un dispositif de commande d'un circuit de dérivation de puissance d'un véhicule hybride.

Un domaine d'application de l'invention est les véhicules hybrides routiers.

Le document US-B-6 486 632 décrit un dispositif comportant des premier et deuxième onduleurs dont les côtés continus sont reliés à une unité de stockage de tension continue, dont les côtés alternatifs sont destinés à être reliés à des première et deuxième machines électriques polyphasées, destinées à être couplées à la transmission mécanique du véhicule, la première machine étant apte à fonctionner en moteur et la deuxième machine étant apte à fonctionner en générateur pour la dérivation de puissance depuis la transmission, les onduleurs comportant en outre des interrupteurs de découpage pour la conversion entre les côtés continus et les côtés alternatifs, le dispositif comportant une capacité de filtrage d'harmoniques sur les côtés continus des onduleurs et une unité de commande des interrupteurs de découpage, comportant un mode de commande de ceux-ci par modulation de largeur d'impulsions d'une porteuse ayant une fréquence identique pour les onduleurs.

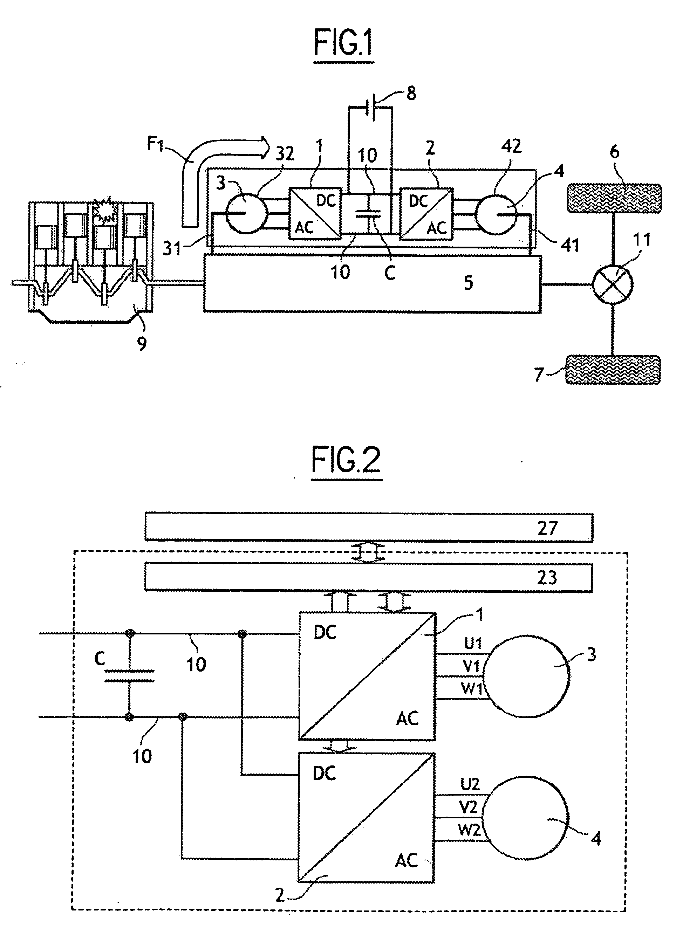

Ainsi que cela est connu dans les véhicules hybrides à dérivation de puissance et est représenté à la figure 1, deux machines électriques 3, 4 sont reliées à une transmission mécanique 5 reliée à des roues 6, 7 d'un côté et à un système 8 de stockage d'énergie de l'autre côté. Deux onduleurs 1, 2 sont utilisés pour commander les machines 3, 4. Pour la dérivation de puissance depuis la transmission 5 lorsque celle-ci est entraînée par le moteur 9 à combustion interne du véhicule, l'une des machines doit fonctionner en moteur, tandis que l'autre doit fonctionner en générateur. Lorsque le moteur à combustion interne est coupé, l'une des deux machines 3, 4 est utilisée pour entraîner la transmission.

Une capacité C de filtrage commune est habituellement montée sur le bus 10 de courant continu entre les deux onduleurs 1, 2.

Les onduleurs 1, 2 découpent par ouverture et fermeture de leurs interrupteurs la tension continue pour générer des tensions alternatives qui alimentent les machines 3, 4. On parle de découpage MLI (modulation de la largeur d'impulsion).

Le découpage à haute fréquence (quelques kHz) génère des harmoniques en plus du fondamental utile sur les courants des machines, et de la même manière élargit le spectre du courant généré sur le bus continu 10.

La capacité C filtre l'essentiel de ces harmoniques de courant pour renvoyer un courant le plus continu possible vers l'élément de stockage. Le vieillissement de la capacité est sensible à son échauffement, donc au courant efficace qui la traverse. Il est donc intéressant de contrôler le courant à filtrer et son contenu harmonique.

De plus, il existe plusieurs stratégies de découpage possibles pour des onduleurs.

Un premier objectif de l'invention est d'optimiser la commande en modulation de largeur d'impulsions des onduleurs.

Un deuxième objectif de l'invention est de minimiser les ondulations de courant de la capacité, ainsi que le courant efficace qui la traverse.

Un troisième objectif de l'invention est d'optimiser la tension des phases des machines.

Un premier objet de l'invention est un dispositif de commande d'un circuit de dérivation de puissance d'un véhicule hybride,
le dispositif comportant des premier et deuxième onduleurs dont les côtés continus sont reliés à une unité de stockage de tension continue, dont les côtés alternatifs sont destinés à être reliés à des première et deuxième machines électriques polyphasées, destinées à être couplées à la transmission mécanique du véhicule, la première machine étant apte à fonctionner en générateur et la deuxième machine étant apte à fonctionner en moteur pour la dérivation de puissance depuis la transmission, les onduleurs comportant en outre des interrupteurs de découpage pour la conversion entre les côtés continus et les côtés alternatifs, dispositif comportant une capacité de filtrage d'harmoniques sur les côtés continus des onduleurs et une unité de commande des interrupteurs de découpage, comportant au moins un mode de commande de ceux-ci par modulation de largeur d'impulsions d'une porteuse ayant une fréquence identique pour les onduleurs,
caractérisé en ce que
les première et deuxième machines sont aptes à fonctionner en moteur / moteur ou en générateur / générateur, l'unité de commande comporte des moyens de détection du fonctionnement des première et deuxième machines en moteur / moteur ou en générateur / générateur et des premiers moyens de commande des interrupteurs de découpage du deuxième onduleur d'une manière décalée temporellement par rapport aux interrupteurs de découpage du premier onduleur en cas de détection du fonctionnement des première et deuxième machines en moteur / moteur ou en générateur / générateur, et en outre l'unité de commande des onduleurs comporte un moyen de commande de leurs interrupteurs de découpage suivant un mode de modulation vectorielle de largeur d'impulsions.

Suivant d'autres caractéristiques de l'invention :
- Ledit décalage temporel entre le deuxième onduleur et le premier onduleur correspond à une demi - période de la porteuse.
- L'unité de commande des onduleurs comporte un premier mode de commande de leurs interrupteurs de découpage par modulation scalaire de largeur d'impulsions, un deuxième mode de commande de leurs interrupteurs de découpage par modulation vectorielle de largeur d'impulsions, un troisième mode de commande de leurs interrupteurs de découpage par modulation de largeur d'impulsions sur - modulée et un quatrième mode de commande de leurs interrupteurs de découpage pleine onde.
- L'unité de commande comporte un moyen de sélection d'un mode pour appliquer aux onduleurs le premier, deuxième, troisième ou quatrième mode pour des valeurs associées de vitesses et de couples de machines situées respectivement dans des premier, deuxième, troisième et quatrième domaines adjacents de valeurs croissantes.

- L'unité de commande comporte, en plus des premiers moyens de commande, des moyens de détection du fonctionnement des première et deuxième machines en moteur/générateur ou en générateur/moteur et des moyens de commande des interrupteurs de découpage du deuxième onduleur avec la même phase temporelle que les interrupteurs de découpage du premier onduleur en cas de détection du fonctionnement des première et deuxième machine en moteur/générateur ou en générateur/moteur.
- Un convertisseur continu - continu est intercalé entre la capacité et l'unité de stockage d'énergie.

Un deuxième objet de l'invention est un procédé de commande d'un circuit de dérivation de puissance à bord d'un véhicule hybride, pour la mise en oeuvre du dispositif de commande tel que décrit ci-dessus, utilisant des premier et deuxième onduleurs dont les côtés continus sont reliés à une unité de stockage de tension continue, dont les côtés alternatifs sont reliés à des première et deuxième machines électriques polyphasées, couplées à la transmission mécanique du véhicule, la première machine fonctionnant en générateur et la deuxième machine fonctionnant en moteur pour la dérivation de puissance depuis la transmission, les onduleurs comportant en outre des interrupteurs de découpage pour la conversion entre les côtés continus et les côtés alternatifs, une capacité de filtrage d'harmoniques étant prévue sur les côtés continus des onduleurs, les interrupteurs de découpage étant commandés par une unité de commande ayant au moins un mode de commande de ceux-ci par modulation de largeur d'impulsions d'une porteuse ayant une fréquence identique pour les onduleurs,
caractérisé en ce que
on fait fonctionner les première et deuxième machines en moteur / moteur ou en générateur / générateur,
on commande les interrupteurs de découpage du deuxième onduleur d'une manière décalée temporellement par rapport aux interrupteurs de découpage du premier onduleur en cas de fonctionnement des première et deuxième machines en moteur / moteur ou en générateur / générateur.

Suivant d'autres caractéristiques de l'invention :
- Le décalage temporel entre le deuxième onduleur et le premier onduleur en cas de fonctionnement des première et deuxième machines en moteur / moteur ou en générateur / générateur correspond à une demi - période de la porteuse.
- On commande les interrupteurs de découpage des onduleurs selon un premier mode de commande par modulation scalaire de largeur d'impulsions, selon un deuxième mode de commande par modulation vectorielle de largeur d'impulsions, selon un troisième mode de commande par modulation de largeur d'impulsions sur - modulée et selon un quatrième mode de commande pleine onde pour des valeurs associées de vitesses et de couples des machines situées respectivement dans des premier, deuxième, troisième et quatrième domaines adjacents de valeurs croissantes.

Un troisième objet de l'invention est un véhicule hybride, comportant un moteur à combustion interne pour l'entraînement de roues par l'intermédiaire d'une transmission mécanique, la transmission mécanique étant couplée à des première et deuxième machine électriques, la première machine étant apte à fonctionner en générateur et la deuxième machine étant apte à fonctionner en moteur pour former un circuit de dérivation de puissance depuis la transmission, caractérisé en ce que les première et deuxième machines électriques sont reliées à un dispositif embarqué de commande tel que décrit ci-dessus.

L'invention sera mieux comprise à la lecture de la description qui va suivre, donnée uniquement à titre d'exemple non limitatif en référence aux dessins annexés, sur lesquels :
- la figure 1 est un synoptique de la transmission d'un véhicule hybride,
- la figure 2 est un synoptique de la partie électrotechnique reliée à la transmission mécanique selon la figure 1,
- la figure 3 est un synoptique détaillé des deux onduleurs de la partie électrotechnique de la figure 2,
- la figure 4 est un diagramme représentant en abscisse la vitesse de rotation de la machine électrique et en ordonnée le couple de la machine électrique et des courbes délimitant les choix de découpage des tensions par les onduleurs en fonction des zones de fonctionnement de la machine,
- la figure 5 représente un exemple du signal de courant obtenu par modulation scalaire d'un sinus en fonction du temps en abscisse,
- la figure 6 est un synoptique de la transmission selon la figure 1 avec convertisseur continu -/continu.

Aux figures, les machines électriques 3, 4 sont par exemple triphasées et comportent chacune trois phases distinctes U1, V1, W1, et U2, V2, W2, reliées respectivement au côté alternatif AC des onduleurs 1 et 2. Les machines 3, 4 comportent respectivement une partie mobile 31, 41, qui est reliée mécaniquement à la transmission 5 et qui est mobile par rapport à la partie mécanique 32, 42 reliée aux phases U1, V1, W1, U2, V2, W2.

Lorsque le moteur 9 à combustion interne fonctionne pour entraîner mécaniquement la transmission 5 pour entraîner en rotation les roues 6, 7 par l'intermédiaire d'un différentiel 11, la machine 3 fonctionne en générateur et dérive de la puissance électrique depuis la transmission 5 vers le côté alternatif AC de l'onduleur 1 ainsi que représenté par la flèche F1, cette puissance électrique dérivée étant transformée en courant continu sur le côté continu DC de l'onduleur 1 pour stocker de l'énergie dans l'élément 8 de stockage. L'autre machine 4 fonctionne alors en moteur pour cette dérivation de puissance. L'élément 8 de stockage d'énergie est par exemple formé par une ou plusieurs batteries électriques rechargeables, ou une ou plusieurs super-capacités, ainsi que cela est connu. Le moteur à combustion interne peut également entraîner les roues avec la machine 3 en moteur et la machine 4 en générateur. Le choix des modes moteur / générateur ou générateur / moteur est choisi par le superviseur.

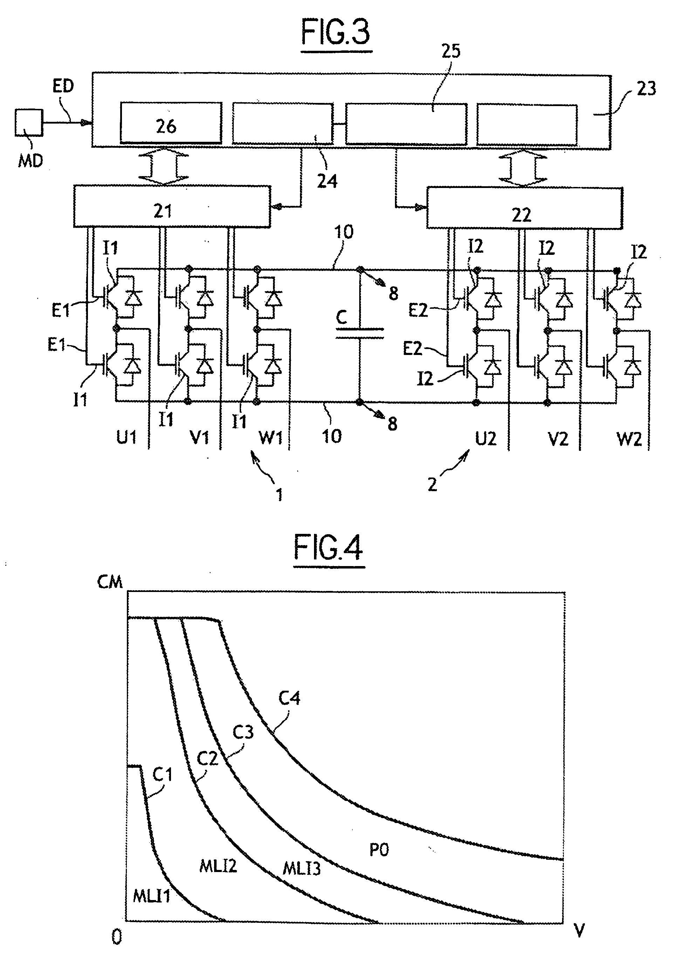

Les onduleurs 1, 2 comportent respectivement des interrupteurs I1, 12 pour découper le courant continu présent sur leur côté DC en courant alternatif sur les phases U1, V1, W1 et U2, V2, W2. Par exemple, à la figure 3, chaque onduleur 1, 2 comporte, pour chaque phase, deux interrupteurs I1 ou 12 en série entre les deux conducteurs 10 du bus continu, le noeud entre les deux interrupteurs I1 ou 12 étant relié à la phase U1, V1 ou W1, U2, V2 ou W2. Chaque interrupteur I1, 12 est par exemple formé par un transistor de type IGBT (transistor bipolaire à grille isolée) en parallèle duquel est prévue une diode en inverse. Chaque interrupteur I1, I2 comporte une entrée E1, E2 pour commander son ouverture ou sa fermeture, cette entrée étant formée pour les transistors IGBT par leur grille. Les entrées E1 de commande des interrupteurs I1 de l'onduleur 1 sont reliées à un premier circuit 21 de commande, tandis que les entrées E2 de commande des interrupteurs I2 de l'onduleur 2 sont reliées à un deuxième circuit 22 de commande. Les premier et deuxième circuits 21, 22 de commande sont reliés à une unité 23 de commande bas niveau, comportant un premier module 24 de génération d'une porteuse, qui est envoyé au premier circuit 21, et un deuxième circuit 25 de génération de porteuse, qui est envoyé au deuxième circuit 22. L'unité 23 comporte un ou plusieurs calculateurs 26, notamment pour la commande des modules 24 et 25. En outre, l'unité 23 de commande bas niveau est reliée à une unité 27 de commande haut niveau du véhicule.

La volonté du conducteur et/ou la stratégie de contrôle du véhicule déterminent les couples et/ou les vitesses appliquées aux machines électriques 3, 4.

Indépendamment de cette commande « couche haute » issue d'un superviseur 27, il est possible de contrôler les signaux « couche basse » des onduleurs ; notamment la stratégie du découpage en tension des machines 3, 4. La commande « couche basse » est intégrée dans le ou les calculateurs 26. Ce ou ces calculateurs 26 pilotent les circuits de commande 21, 22 qui transmettent les ordres de commutation ON/OFF à l'interrupteur 11, 12.

Il existe plusieurs fonctionnements des machines électriques, choisis par le contrôle « haut niveau » du véhicule. Les deux machines peuvent fonctionner en :
■ moteur/moteur,
■ générateur/moteur,
■ moteur/générateur,
■ générateur / générateur.

La tension de phase des machines est découpée, suivant des premier, deuxième, troisième et quatrième modes de commande imposés par le calculateur 26 de l'unité 23 aux circuits 21, 22, respectivement en :
■ MLI scalaire, désignée aux figures par MLI1,
■ MLI vectorielle, désignée aux figures par MLI2,
■ MLI sur-modulé, désignée aux figures par MLI3,
■ Pleine onde, désignée aux figures par PO.

La stratégie de découpage est sélectionnée pour résoudre le problème consistant à réduire le dimensionnement de la capacité C de filtrage, sans pour autant trop complexifier la commande couche basse et sans impacter les performances du véhicule.

Un autre but est de réduire les harmoniques de courant dont le courant efficace est à l'origine de l'échauffement et du vieillissement de la capacité C de filtrage. Une tension sinusoïdale "propre" est également souhaitée aux bornes des machines.

Par conséquent, on se dispense de devoir automatiquement surdimensionner la capacité C pour résoudre ces problèmes.

On cherche à réduire au maximum le courant filtré par la capacité, suivant les cas de fonctionnement du véhicule et des machines électriques.

En même temps, on cherche à appliquer la tension la plus propre (c'est-à-dire dont les premiers harmoniques, en dehors du fondamental, sont à la fréquence du découpage ; il n'y a pas d'harmoniques impairs 3, 5, 7, et suivants, les premiers rangs proviennent du découpage) aux machines suivant les consignes de couples et de vitesse.

Le choix du type de commande dépend en premier lieu de la vitesse et du couple demandé aux machines et est sélectionné par le calculateur 26.

### Cas d'alimentation des machines avec de faibles amplitudes de tensions (généralement des utilisations à faible vitesse et faible couple)

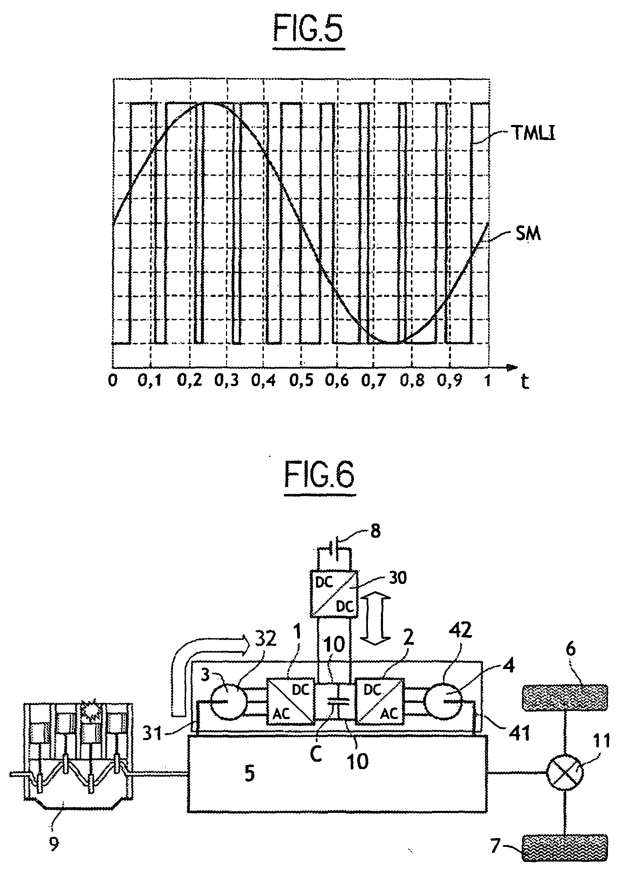

On privilégie la commande MLI scalaire lorsqu'une machine est alimentée par une tension de faible amplitude. Dans l'état de l'art, une méthode simple pour générer un tel signal MLI est de faire une comparaison entre une porteuse triangulaire (à la fréquence du découpage MLI) et le signal de consigne (modulante). Dans les faits, la largeur d'impulsions est de plus en plus issue du résultat d'un calculateur numérique au détriment d'une comparaison analogique. La figure 5 montre le résultat d'un signal sinusoïdal SM modulé par MLI scalaire (TMLI).

L'utilisation de cette commande permet d'appliquer de faibles tensions (voire nulle) aux machines. Elle est donc parfaitement adaptée aux zones de basses vitesses.

### Cas général d'utilisation

Dans la majorité des cas d'utilisation, on privilégie une commande MLI vectorielle.

La commande MLI vectorielle est non plus l'application de 3 tensions indépendantes l'une de l'autre comme la MLI scalaire mais comme une stratégie pour piloter le vecteur tournant d'un système triphasé (ou polyphasé), donc avec une synchronisation des impulsions entre phases. L'un des principaux avantages de cette stratégie est de pouvoir fournir une tension fondamentale supérieure à celle que pourraient délivrer trois stratégies scalaires indépendantes juxtaposées.

Lorsque l'on atteint l'amplitude maximale de tension sinusoïdale que l'on peut générer en MLI vectorielle, on parle alors de MLI sur-modulé. Dans ce cas, sont ajoutés des harmoniques multiples de la fréquence fondamentale dans le signal de façon à augmenter l'amplitude de ce dernier.

### Cas d'utilisation à tension très élevée (généralement à très forte puissance et forte vitesse)

On privilégie la commande pleine onde lorsque l'amplitude des tensions ne peut être atteinte par les autres modes de commande. La tension d'alimentation est appliquée alternativement sur chaque pôle de la charge à la fréquence fondamentale que l'on souhaite obtenir. On a ainsi un maximum d'amplitude de tension alternative aux bornes des machines. On parvient ainsi à atteindre les zones de forte puissance (couple) au prix d'une surcharge en courant (pertes supplémentaires) due aux harmoniques basse fréquence de la tension.

Les transitions entre les modes sont décidées en fonction des pertes électriques et leur répartition entre pertes machines et pertes onduleur. La figure 4 illustre différents cas de fonctionnement.

A la figure 4, le mode de commande MLI1 scalaire est délimité à partir du point O de vitesse V nulle et de couple CM nul par une première courbe C1 de couple en fonction de la vitesse. Le deuxième mode MLI2 de commande vectorielle est délimité par la courbe C1 et une deuxième courbe C2 pour des valeurs de vitesse V et/ou de couple CM croissantes par rapport à la courbe C1. Le troisième mode MLI3 de commande surmodulé vectorielle est délimité par la courbe C2 et une troisième courbe C3 pour des valeurs de vitesse V et/ou de couple CM croissantes par rapport à la courbe C2. Le quatrième mode de commande pleine onde PO est délimité par la courbe C3 et une quatrième courbe C4 pour des valeurs de vitesse V et/ou de couple CM croissantes par rapport à la courbe C3. Les courbes C1, C2, C3, C4 sont décroissantes, par exemple à la manière d'hyperboles. La quatrième courbe C4 est une courbe enveloppe de couple de la machine en moteur.

Le choix du type de commande dépend également des cas d'utilisation des deux machines 3, 4.

### Cas moteur/moteur ou générateur/-générateur

Ces modes sont exploités en ZEV (roulage exclusivement électrique, correspondant à l'arrêt du moteur 9 à combustion interne).

Si les deux machines sont commandées en MLI, on déphasera le découpage d'une machine par rapport à l'autre. Ce décalage est par exemple d'une demi-période de porteuse. Les deux porteuses ont la même fréquence. Dans le mode de réalisation de la figure 3, le module 25 de génération de porteuse envoie au circuit 22 de commande de l'onduleur 2 une porteuse décalée d'une demi-période, c'est-à-dire en opposition de phase, par rapport à la porteuse de même fréquence envoyée par le module 24 de génération au circuit 21 de commande de l'onduleur 1. Ainsi, les porteuses envoyées aux onduleurs 1 et 2 ont la même fréquence et sont décalées d'une demi-période entre elles.

Le fait que les machines 3, 4 fonctionnent chacune en moteur ou chacune en générateur est détecté par tout moyen MD approprié de détection, cet état ED de détection de fonctionnement en moteur - moteur ou générateur - générateur des machines 3, 4 étant envoyé à l'unité 23 de commande pour décaler les porteuses des modules 24 et 25.

Dans un exemple où les deux machines 3, 4 en mode moteur ont été commandées en modulation de largeur d'impulsion vectorielle, lorsque la somme des courants à filtrer des deux onduleurs a été de 76,5 Ampères efficaces (c'est-à-dire RMS) pour des porteuses non décalées, cette somme des courants à filtrer des deux onduleurs était de 46,8 Ampères efficaces avec la commande en modulation de largeur d'impulsion vectorielle pour des porteuses décalées d'une demi-période, soit une diminution de 39% du courant efficace à filtrer par la capacité C.

Dans un mode de réalisation, on privilégie l'équilibre des courants de phase des deux machines. C'est-à-dire que le contrôle « haut niveau » choisit le couple correspondant pour un même courant sur chaque machine, la somme des couples étant transmise à la roue. Typiquement, cela est possible en mode de roulage ZEV.

### Cas moteur/générateur ou générateur/moteur

Il s'agit d'un mode de fonctionnement habituel du véhicule hybride. Les couples appliqués au moteur sont pilotés par le contrôle «haut niveau».

Comme les courants sont naturellement de sens opposés, le courant à filtrer sur le bus continu 10 se réduit naturellement.

Si les deux machines sont commandées en MLI, on préférera que les porteuses des deux onduleurs aient la même phase et la même fréquence.

Dans le mode de réalisation de la figure 6, la structure peut comporter un convertisseur continu / continu (DC/DC) 30 entre la capacité C et l'élément 8 de stockage de façon à avoir une tension de bus 10 DC optimale pour les onduleurs 1, 2 et machines 3, 4 d'une part, et rendre cette tension insensible aux variations de tension de l'élément 8 de stockage d'autre part.

Dans ce cas, la fréquence des harmoniques de hachage issus du convertisseur continu / continu 30 doivent être de fréquence supérieure à ceux des onduleurs, ce qui est la plupart du temps le cas.

Bien que peu utilisée, une variante avec des moteurs de plus de trois phases peu être envisagée. La conséquence principale est que les harmoniques basse fréquence du courant à filtré seront d'un rang supérieur à 6 fois la fréquence fondamentale du courant de phase (2 fois le nombre de phases).

La principale conséquence est que l'écart se réduit entre les harmoniques de découpage et les harmoniques dues aux fondamental du courant de phase. Ceci peu amener à augmenter la fréquence du découpage par rapport à un système triphasé si cet écart est insuffisant.

Ainsi, en entrée des onduleurs 1, 2 (côté continu), on minimise les ondulations de courant de la capacité C. En sortie (côté alternatif) des onduleurs 1, 2, on minimise l'erreur en consigne et fondamental des tensions aux bornes des machines 3, 4, pour avoir ainsi des tensions sinus propres. Bien entendu, on peut soit seulement minimiser les ondulations de courant, soit seulement avoir une tension de sortie propre.

## Revendications

1. Dispositif de commande d'un circuit de dérivation de puissance d'un véhicule hybride,
le dispositif comportant des premier et deuxième onduleurs (1, 2) dont les côtés continus sont reliés à une unité (8) de stockage de tension continue, dont les côtés alternatifs sont destinés à être reliés à des première et deuxième machines électriques polyphasées (3, 4), destinées à être couplées à la transmission mécanique (5) du véhicule, la première machine (3) étant apte à fonctionner en générateur et la deuxième machine (4) étant apte à fonctionner en moteur pour la dérivation de puissance depuis la transmission (5), les onduleurs (1, 2) comportant en outre des interrupteurs de découpage pour la conversion entre les côtés continus et les côtés alternatifs, le dispositif comportant une capacité (C) de filtrage d'harmoniques sur les côtés continus des onduleurs (1, 2) et une unité (23) de commande des interrupteurs de découpage, comportant au moins un mode de commande de ceux-ci par modulation de largeur d'impulsions d'une porteuse ayant une fréquence identique pour les onduleurs (1, 2), l'unité (23) de commande des onduleurs comportant en outre un moyen (26) de commande de leurs interrupteurs (I1, I2) de découpage suivant un mode (MLI2) de modulation vectorielle de largeur d'impulsions,
**caractérisé en ce que**
les première et deuxième machines (3, 4) sont aptes à fonctionner en moteur / moteur ou en générateur / générateur, l'unité (23) de commande comporte des moyens (MD) de détection du fonctionnement des première et deuxième machines (3, 4) en moteur / moteur ou en générateur / générateur et des premiers moyens (24, 25) de commande des interrupteurs (I2) de découpage du deuxième onduleur (2) d'une manière décalée temporellement par rapport aux interrupteurs (I1) de découpage du premier onduleur (1) en cas de détection du fonctionnement des première et deuxième machines (3, 4) en moteur / moteur ou en générateur / générateur, et en outre l'unité (23) de commande des onduleurs comporte
- un premier mode (MLI1) de commande de leurs interrupteurs (I1, I2) de découpage par modulation scalaire de largeur d'impulsions,
- un deuxième mode (MLI2) de commande de leurs interrupteurs (I1, I2) de découpage par modulation vectorielle de largeur d'impulsions,
- un troisième mode (MLI3) de commande de leurs interrupteurs (I1, I2) de découpage par modulation de largeur d'impulsions sur - modulée et
- un quatrième mode (PO) de commande de leurs interrupteurs (I1, 12) de découpage pleine onde.

2. Dispositif de commande suivant la revendication 1, **caractérisé en ce que** ledit décalage temporel entre le deuxième onduleur (2) et le premier onduleur (1) correspond à une demi - période de la porteuse.

3. Dispositif de commande suivant l'une quelconque des revendications précédentes, **caractérisé en ce que** l'unité (23) de commande comporte un moyen (26) de sélection d'un mode pour appliquer aux onduleurs (1, 2) le premier, deuxième, troisième ou quatrième mode pour des valeurs associées de vitesses et de couples de machines (3,4) situées respectivement dans des premier, deuxième, troisième et quatrième domaines adjacents de valeurs croissantes.

4. Dispositif de commande suivant la revendication 3, **caractérisé en ce que** le premier mode de commande (MLI1) scalaire est délimité à partir du point (O) de vitesse (V) nulle et de couple (CM) nul par une première courbe (C1) de couple en fonction de la vitesse, le deuxième mode (MLI2) de commande vectorielle est délimité par la première courbe (C1) et une deuxième courbe (C2) pour des valeurs de vitesse (V) et/ou de couple (CM) croissantes par rapport à la première courbe (C1), le troisième mode (MLI3) de commande sur-modulé vectorielle est délimité par la deuxième courbe (C2) et une troisième courbe (C3) pour des valeurs de vitesse (V) et/ou de couple (CM) croissantes par rapport à la deuxième courbe (C2), le quatrième mode de commande pleine onde (PO) est délimité par la troisième courbe (C3) et une quatrième courbe (C4) pour des valeurs de vitesse (V) et/ou de couple (CM) croissantes par rapport à la troisième courbe (C3), les première, deuxième, troisième et quatrième courbes (C1, C2, C3, C4) étant décroissantes, la quatrième courbe C4 étant une courbe enveloppe de couple d'une des machines fonctionnant en moteur.

5. Dispositif de commande suivant l'une quelconque des revendications précédentes, **caractérisé en ce que** l'unité (23) de commande comporte, en plus des premiers moyens (24, 25) de commande, des moyens de détection du fonctionnement des première et deuxième machines (3, 4) en moteur/générateur ou en générateur/moteur et des moyens de commande (23) des interrupteurs (I2) de découpage du deuxième onduleur (2) avec la même phase temporelle que les interrupteurs (I1) de découpage du premier onduleur (1) en cas de détection du fonctionnement des première et deuxième machine (3, 4) en moteur/générateur ou en générateur/moteur.

6. Dispositif de commande suivant l'une quelconque des revendications précédentes, **caractérisé en ce qu'**un convertisseur (30) continu - continu est intercalé entre la capacité (C) et l'unité (8) de stockage d'énergie.

7. Procédé de commande d'un circuit de dérivation de puissance à bord d'un véhicule hybride, pour la mise en oeuvre du dispositif de commande suivant l'une quelconque des revendications précédentes, utilisant des premier et deuxième onduleurs (1, 2) dont les côtés continus sont reliés à une unité (8) de stockage de tension continue, dont les côtés alternatifs sont reliés à des première et deuxième machines électriques polyphasées (3, 4), couplées à la transmission mécanique (5) du véhicule, la première machine (3) fonctionnant en générateur et la deuxième machine (4) fonctionnant en moteur pour la dérivation de puissance depuis la transmission (5), les onduleurs (1, 2) comportant en outre des interrupteurs de découpage pour la conversion entre les côtés continus et les côtés alternatifs, une capacité (C) de filtrage d'harmoniques étant prévue sur les côtés continus des onduleurs (1, 2), les interrupteurs de découpage étant commandés par une unité (23) de commande ayant au moins un mode de commande de ceux-ci par modulation de largeur d'impulsions d'une porteuse ayant une fréquence identique pour les onduleurs (1, 2),
**caractérisé en ce que**
on fait fonctionner les première et deuxième machines (3, 4) en moteur / moteur ou en générateur / générateur,
on commande les interrupteurs (I2) de découpage du deuxième onduleur (2) d'une manière décalée temporellement par rapport aux interrupteurs (I1) de découpage du premier onduleur (1) en cas de fonctionnement des première et deuxième machines (3, 4) en moteur / moteur ou en générateur / générateur,
on commande les interrupteurs (I1,I2) de découpage des onduleurs (1,2) selon un premier mode (ML1) de commande de modulation scalaire de largeur d'impulsions, un deuxième mode (MLI2) de commande par modulation vectorielle de largeur d'impulsions, un troisième mode (MLI3) par modulation de largeur d'impulsions sur-modulée et selon un quatrième mode (PO) de commande pleine onde pour des valeurs associées de vitesses et de couples de machine (3,4) situées respectivement dans des premier, deuxième, troisième et quatrième domaines adjacents de valeurs croissantes.

8. Procédé de commande suivant la revendication 7, **caractérisé en ce que** le décalage temporel entre le deuxième onduleur (2) et le premier onduleur (1) en cas de fonctionnement des première et deuxième machines (3, 4) en moteur / moteur ou en générateur / générateur correspond à une demi - période de la porteuse.

9. Procédé de commande suivant l'une quelconque des revendications 7 et 8, **caractérisé en ce que** le premier mode de commande (MLI1) scalaire est délimité à partir du point (O) de vitesse (V) nulle et de couple (CM) nul par une première courbe (C1) de couple en fonction de la vitesse, le deuxième mode (MLI2) de commande vectorielle est délimité par la première courbe (C1) et une deuxième courbe (C2) pour des valeurs de vitesse (V) et/ou de couple (CM) croissantes par rapport à la première courbe (C1), le troisième mode (MLI3) de commande sur-modulé vectorielle est délimité par la deuxième courbe (C2) et une troisième courbe (C3) pour des valeurs de vitesse (V) et/ou de couple (CM) croissantes par rapport à la deuxième courbe (C2), le quatrième mode de commande pleine onde (PO) est délimité par la troisième courbe (C3) et une quatrième courbe (C4) pour des valeurs de vitesse (V) et/ou de couple (CM) croissantes par rapport à la troisième courbe (C3), les première, deuxième, troisième et quatrième courbes (C1, C2, C3, C4) étant décroissantes, la quatrième courbe C4 étant une courbe enveloppe de couple d'une des machines fonctionnant en moteur.

10. Véhicule hybride, comportant un moteur (9) à combustion interne pour l'entraînement de roues (6, 7) par l'intermédiaire d'une transmission mécanique (5), la transmission mécanique (5) étant couplée à des première et deuxième machine électriques (3, 4), la première machine (3) étant apte à fonctionner en générateur et la deuxième machine (4) étant apte à fonctionner en moteur pour former un circuit de dérivation de puissance depuis la transmission (5), **caractérisé en ce que** les première et deuxième machines électriques (3, 4) sont reliées à un dispositif embarqué de commande suivant l'une quelconque des revendications 1 à 6.

## Claims

1. Device for controlling a power shunt circuit of a hybrid vehicle,
the device comprising first and second inverters (1, 2) the DC sides of which are connected to a DC-Voltage storage unit (8), the AC sides of which are designed to be connected to first and second polyphase electric machines (3, 4), designed to be coupled to the mechanical drive (5) of the vehicle, the first machine (3) being capable of operating as a generator and the second machine (4) being capable of operating as a motor for the shunting of power from the drive (5), the inverters (1, 2) also comprising chopping switches for the conversion between the DC sides and the AC sides, the device comprising a capacitor (C) for filtering harmonics on the DC sides of the inverters (1, 2) and a unit (23) for controlling the chopping switches, comprising at least one mode for controlling the latter by pulse-width modulation of a carrier having an identical frequency for the inverters (1, 2), the unit (23) for controlling the inverters also comprising a means (26) for controlling their chopping switches (I1, 12) according to a pulse-width vectorial modulation mode (MLI2),
**characterized in that**
the first and second machines (3, 4) are capable of operating as motor/motor or as generator/generator, the control unit (23) comprises means (MD) for detecting the operation of the first and second machines (3, 4) as motor/motor or as generator/ generator and first means (24, 25) for controlling the chopping switches (I2) of the second inverter (2) in a time-shifted manner relative to the chopping switches (I1) of the first inverter (1) in the event of detection of the operation of the first and second machines (3, 4) as motor/motor or as generator/generator, and also the unit (23) for controlling the inverters comprises
- a first mode (MLI1) for controlling their chopping switches (I1, 2) by pulse-width scalar modulation,
- a second mode (MLI2) for controlling their chopping switches (I1, I2) by pulse-width vectorial modulation,
- a third mode (MLI3) for controlling their chopping switches (I1, I2) by overmodulated pulse-width modulation and
- a fourth, full wave, mode (PO) for controlling their chopping switches (I1, I2).

2. Control device according to Claim 1, **characterized in that** said time shift between the second inverter (2) and the first inverter (1) comprises a half-period of the carrier.

3. Control device according to either of the preceding claims, **characterized in that** the control unit (23) comprises a mode-selection means (26) for applying to the inverters (1, 2) the first, second, third or fourth mode for associated speed and torque values of machines (3, 4) situated respectively in first, second, third and fourth adjacent fields of increasing values.

4. Control device according to Claim 3, **characterized in that** the first scalar control mode (MLI1) is delimited from the point (O) of zero speed (V) and of zero torque (CM) by a first torque curve (C1) as a function of the speed, the second vectorial control mode (MLI2) is delimited by the first curve (C1) and a second curve (C2) for speed values (V) and/or torque values (CM) that are increasing relative to the first curve (C1), the third vectorial overmodulated control mode (MLI3) is delimited by the second curve (C2) and a third curve (C3) for speed values (V) and/or torque values (CM) that are increasing relative to the second curve (C2), the fourth full wave control mode (PO) is delimited by the third curve (C3) and a fourth curve (C4) for speed values (V) and/or torque values (CM) that are increasing relative to the third curve (C3), the first, second, third and fourth curves (C1, C2, C3, C4) being decreasing, the fourth curve (C4) being an envelope curve of torque of one of the machines operating as motor.

5. Control device according to any one of the preceding claims, **characterized in that** the control unit (23) comprises, in addition to the first control means (24, 25), means for detecting the operation of the first and second machines (3, 4) as motor/generator or as generator/motor and means (23) for controlling the chopping switches (I2) of the second inverter (2) with the same time phase as the chopping switches (I1) of the first inverter (1) in the event of detection of the operation of the first and second machine (3, 4) as motor/generator or as generator/motor.

6. Control device according to any one of the preceding claims, **characterized in that** a DC-DC converter (30) is inserted between the capacitor (C) and the power storage unit (8).

7. Method for controlling a power shunt circuit onboard a hybrid vehicle, for applying the control device according to any one of the preceding claims, using first and second inverters (1, 2) the DC sides of which are connected to a DC-voltage storage unit (8), the AC sides of which are connected to first and second polyphase electric machines (3, 4), coupled to the mechanical drive (5) of the vehicle, the first machine (3) operating as a generator and the second machine (4) operating as a motor for the shunting of power from the drive (5), the inverters (1, 2) also comprising chopping switches for the conversion between the DC sides and the AC sides, a capacitor (C) for filtering harmonics being provided on the DC sides of the inverters (1, 2), the chopping switches being controlled by a control unit (23) having at least one mode for controlling the latter by pulse-width modulation of a carrier having an identical frequency for the inverters (1, 2),
**characterized in that**
the first and second machines (3, 4) are made to operate as motor/motor or as generator/generator,
the chopping switches (I2) of the second inverter (2) are controlled in a time-shifted manner relative to the chopping switches (I1) of the first inverter (1) in the event of operation of the first and second machines (3, 4) as motor/motor or as generator/generator,
the chopping switches (I1, I2) of the inverters (1, 2) are controlled according to a first pulse-width scalar modulation control mode (MLI1), according to a second pulse-width vectorial modulation control mode (MLI2), according to a third overmodulated pulse-width modulation control mode (MLI3), and according to a fourth, full wave, control mode (PO) for associated speed and torque values of the machines (3, 4) situated respectively in first, second, third and fourth adjacent fields of increasing values.

8. Control method according to Claim 7, **characterized in that** the time shift between the second inverter (2) and the first inverter (1) in the event of operation of the first and second machines (3, 4) as motor/motor or as generator/generator corresponds to a half-period of the carrier.

9. Control method according to either one of Claims 7 and 8, **characterized in that** the first scalar control mode (MLI1) is delimited from the point (O) of zero speed (V) and of zero torque (CM) by a first torque curve (C1) as a function of the speed, the second vectorial control mode (MLI2) is delimited by the first curve (C1) and a second curve (C2) for speed values (V) and/or torque values (CM) that are increasing relative to the first curve (C1), the third vectorial overmodulated control mode (MLI3) is delimited by the second curve (C2) and a third curve (C3) for speed values (V) and/or torque values (CM) that are increasing relative to the second curve (C2), the fourth full wave control mode (PO) is delimited by the third curve (C3) and a fourth curve (C4) for speed values (V) and/or torque values (CM) that are increasing relative to the third curve (C3), the first, second, third and fourth curves (C1, C2, C3, C4) being decreasing, the fourth curve (C4) being an envelope curve of torque of one of the machines operating as motor.

10. Hybrid vehicle, comprising an internal combustion engine (9) for driving wheels (6, 7) via a mechanical drive (5), the mechanical drive (5) being coupled to first and second electric machines (3, 4), the first machine (3) being capable of operating as a generator and the second machine (4) being capable of operating as a motor in order to form a power shunt circuit from the drive (5), **characterized in that** the first and second electric machines (3, 4) are connected to an onboard control device according to any one of Claims 1 to 6.

## Patentansprüche

1. Vorrichtung zur Steuerung einer Leistungsverzweigungsschaltung eines Hybridfahrzeugs,
wobei die Vorrichtung einen ersten und einen zweiten Wechselrichter (1, 2) umfasst, deren Gleichspannungsseiten mit einer Einheit (8) zur Speicherung einer Gleichspannung verbunden sind, deren Wechselspannungsseiten mit einer ersten und einer zweiten mehrphasigen elektrischen Maschine (3, 4) verbunden werden sollen, die mit dem mechanischen Getriebe (5) des Fahrzeugs gekoppelt werden sollen, wobei die erste Maschine (3) als Generator funktionieren kann und die zweite Maschine (4) als Motor für die Leistungsverzweigung vom Getriebe (5) funktionieren kann, wobei die Wechselrichter (1, 2) außerdem Schaltunterbrecher für die Umwandlung zwischen den Gleichspannungsseiten und den Wechselspannungsseiten umfassen, wobei die Vorrichtung eine Kapazität (C) zur Filterung von Oberwellen auf den Gleichspannungsseiten der Wechselrichter (1, 2) und eine Einheit (23) zur Steuerung der Schaltunterbrecher mit mindestens einem Steuermodus dieser durch Impulsbreitenmodulation einer Trägerwelle mit einer identischen Frequenz für die Wechselrichter (1, 2) umfasst, wobei die Einheit (23) zur Steuerung der Wechselrichter außerdem ein Mittel (26) zur Steuerung ihrer Schaltunterbrecher (I1, I2) gemäß einem Modus (MLI2) zur vektoriellen Impulsbreitenmodulation umfasst,
**dadurch gekennzeichnet, dass**
die erste und die zweite Maschine (3, 4) als Motor/Motor oder als Generator/Generator funktionieren können, die Steuereinheit (23) Mittel (MD) zur Detektion der Funktion der ersten und der zweiten Maschine (3, 4) als Motor/Motor oder als Generator/Generator und erste Mittel (24, 25) zur Steuerung der Schaltunterbrecher (I2) des zweiten Wechselrichters (2) in einer zeitlich in Bezug auf die Schaltunterbrecher (I1) des ersten Wechselrichters (1) versetzten Weise im Fall der Detektion der Funktion der ersten und der zweiten Maschine (3, 4) als Motor/Motor oder als Generator/Generator umfasst, und außerdem die Einheit (23) zur Steuerung der der Wechselrichter Folgendes umfasst
- einen ersten Modus (MLI1) zur Steuerung ihrer Schaltunterbrecher (I1, I2) durch skalare Impulsbreitenmodulation,
- einen zweiten Modus (MLI2) zur Steuerung ihrer
I2) durch vektorielle Impulsbreitenmodulation,
- einen dritten Modus (MLI3) zur Steuerung ihrer Schaltunterbrecher (I1, I2) durch übersteuerte Impulsbreitenmodulation und
- einen vierten Ganzwellenmodus (PO) zur Steuerung ihrer Schaltunterbrecher (I1, I2).

2. Steuervorrichtung nach Anspruch 1, **dadurch gekennzeichnet, dass** der zeitliche Versatz zwischen dem zweiten Wechselrichter (2) und dem ersten Wechselrichter (1) einer Halbperiode der Trägerwelle entspricht.

3. Steuervorrichtung nach einem der vorhergehenden Ansprüche, **dadurch gekennzeichnet, dass** die Steuereinheit (23) ein Mittel (26) zur Auswahl eines Modus zum Anwenden des ersten, des zweiten, des dritten oder des vierten Modus auf die Wechselrichter (1, 2) für zugehörige Werte von Geschwindigkeiten und Drehmomenten der Maschinen (3, 4) umfasst, die in einem ersten, zweiten, dritten bzw. vierten benachbarten Bereich von zunehmenden Werten liegen.

4. Steuervorrichtung nach Anspruch 3, **dadurch gekennzeichnet, dass** der erste skalare Steuermodus (MLI1) von dem Punkt (O) der Geschwindigkeit (V) von null und des Drehmoments (CM) von null durch eine erste Kurve (C1) des Drehmoments in Abhängigkeit von der Geschwindigkeit begrenzt ist, der zweite vektorielle Steuermodus (MLI2) durch die erste Kurve (C1) und eine zweite Kurve (C2) für in Bezug auf die erste Kurve (C1) zunehmende Werte der Geschwindigkeit (V) und/oder des Drehmoments (CM) begrenzt ist, der dritte übersteuerte vektorielle Steuermodus (MLI3) durch die zweite Kurve (C2) und eine dritte Kurve (C3) für in Bezug auf die zweite Kurve (C2) zunehmende Werte der Geschwindigkeit (V) und/oder des Drehmoments (CM) begrenzt ist, der vierte Ganzwellen-Steuermodus (PO) durch die dritte Kurve (C3) und eine vierte Kurve (C4) für in Bezug auf die dritte Kurve (C3) zunehmende Werte der Geschwindigkeit (V) und/oder des Drehmoments (CM) begrenzt ist, wobei die erste, die zweite, die dritte und die vierte Kurve (C1, C2, C3, C4) abfallen, wobei die vierte Kurve C4 eine Hüllkurve des Drehmoments von einer der als Motor funktionierenden Maschinen ist.

5. Steuervorrichtung nach einem der vorhergehenden Ansprüche, **dadurch gekennzeichnet, dass** die Steuereinheit (23) zusätzlich zu den ersten Steuermitteln (24, 25) Mittel zum Detektieren der Funktion der ersten und der zweiten Maschine (3, 4) als Motor/Generator oder als Generator/Motor und Steuermittel (23) der Schaltunterbrecher (I2) des zweiten Wechselrichters (2) mit derselben zeitlichen Phase wie die Schaltunterbrecher (I1) des ersten Wechselrichters (1) im Fall der Detektion der Funktion der ersten und der zweiten Maschine (3, 4) als Motor/Generator oder als Generator/Motor umfasst.

6. Steuervorrichtung nach einem der vorhergehenden Ansprüche, **dadurch gekennzeichnet, dass** ein Gleichspannungswandler (30) zwischen die Kapazität (C) und die Energiespeichereinheit (8) geschaltet ist.

7. Verfahren zum Steuern einer Leistungsverzweigungsschaltung an Bord eines Hybridfahrzeugs für den Einsatz der Steuervorrichtung nach einem der vorhergehenden Ansprüche, die einen ersten und einen zweiten Wechselrichter (1, 2) verwendet, deren Gleichspannungsseiten mit einer Einheit (8) zur Speicherung einer Gleichspannung verbunden sind, deren Wechselspannungsseiten mit einer ersten und einer zweiten mehrphasigen elektrischen Maschine (3, 4) verbunden sind, die mit dem mechanischen Getriebe (5) des Fahrzeugs gekoppelt sind, wobei die erste Maschine (3) als Generator funktioniert und die zweite Maschine (4) als Motor funktioniert, für die Leistungsverzweigung vom Getriebe (5), wobei die Wechselrichter (1, 2) außerdem Schaltunterbrecher für die Umwandlung zwischen den Gleichspannungsseiten und den Wechselspannungsseiten umfassen, wobei eine Kapazität (C) zum Filtern von Oberwellen auf den Gleichspannungsseiten der Wechselrichter (1, 2) vorgesehen ist, wobei die Schaltunterbrecher durch eine Steuereinheit (23) mit mindestens einem Steuermodus dieser durch Impulsbreitenmodulation einer Trägerwelle mit einer identischen Frequenz für die Wechselrichter (1, 2) gesteuert werden,
**dadurch gekennzeichnet, dass**
die erste und die zweite Maschine (3, 4) als Motor/Motor oder als Generator/Generator funktionieren lassen werden,
die Schaltunterbrecher (I2) des zweiten Wechselrichters (2) in einer zeitlich in Bezug auf die Schaltunterbrecher (I1) des ersten Wechselrichters (1) versetzten Weise im Fall der Funktion der ersten und der zweiten Maschine (3, 4) als Motor/Motor oder als Generator/Generator gesteuert werden,
die Schaltunterbrecher (I1, I2) der Wechselrichter (1, 2) gemäß einem ersten Steuermodus (ML1) durch skalare Impulsbreitenmodulation, gemäß einem zweiten Steuermodus (MLI2) durch vektorielle Impulsbreitenmodulation, gemäß einem dritten Modus (MLI3) durch übersteuerte Impulsbreitenmodulation und gemäß einem vierten Ganzwellen-Steuermodus (PO) für zugehörige Werte von Geschwindigkeiten und Drehmomenten der Maschine (3, 4) gesteuert werden, die in einem ersten, einem zweiten, einem dritten bzw. einem vierten benachbarten Bereich von zunehmenden Werten liegen.

8. Steuerverfahren nach Anspruch 7, **dadurch gekennzeichnet, dass** der zeitliche Versatz zwischen dem zweiten Wechselrichter (2) und dem ersten Wechselrichter (1) im Fall der Funktion der ersten und der zweiten Maschine (3, 4) als Motor/Motor oder als Generator/Generator einer Halbperiode der Trägerwelle entspricht.

9. Steuerverfahren nach einem der Ansprüche 7 und 8, **dadurch gekennzeichnet, dass** der erste skalare Steuermodus (MLI1) von einem Punkt (O) der Geschwindigkeit (V) von null und des Drehmoments (CM) von null durch eine erste Kurve (C1) des Drehmoments in Abhängigkeit von der Geschwindigkeit begrenzt ist, der zweite vektorielle Steuermodus (MLI2) durch die erste Kurve (C1) und eine zweite Kurve (C2) für in Bezug auf die erste Kurve (C1) zunehmende Werte der Geschwindigkeit (V) und/oder des Drehmoments (CM) begrenzt ist, der dritte übersteuerte vektorielle Steuermodus (MLI3) durch die zweite Kurve (C2) und eine dritte Kurve (C3) für in Bezug auf die zweite Kurve (C2) zunehmende Werte der Geschwindigkeit (V) und/oder des Drehmoments (CM) begrenzt ist, der vierte Ganzwellen-Steuermodus (PO) durch die dritte Kurve (C3) und eine vierte Kurve (C4) für in Bezug auf die dritte Kurve (C3) zunehmende Werte der Geschwindigkeit (V) und/oder des Drehmoments (CM) begrenzt ist, wobei die erste, die zweite, die dritte und die vierte Kurve (C1, C2, C3, C4) abfallen, wobei die vierte Kurve C4 eine Hüllkurve des Drehmoments von einer der als Motor funktionierenden Maschinen ist.

10. Hybridfahrzeug mit einer Brennkraftmaschine (9) für den Antrieb von Rädern (6, 7) durch ein mechanisches Getriebe (5), wobei das mechanische Getriebe (5) mit einer ersten und einer zweiten elektrischen Maschine (3, 4) gekoppelt ist, wobei die erste Maschine (3) als Generator funktionieren kann und die zweite Maschine (4) als Motor funktionieren kann, um eine Schaltung zur Verzweigung von Leistung vom Getriebe (5) zu bilden, **dadurch gekennzeichnet, dass** die erste und die zweite elektrische Maschine (3, 4) mit einer Bordsteuervorrichtung nach einem der Ansprüche 1 bis 6 verbunden sind.
